# EUROPÄISCHE PATENTSCHRIFT

(11) **EP 1 305 209 B1**
(45) Veröffentlichungstag und Bekanntmachung des Hinweises auf die Patenterteilung: **28.09.2005**
(21) Anmeldenummer: 01960532.8
(22) Anmeldetag: 21.07.2001
(51) Int. Cl.: B64C 1/14, B64C 1/12, C22F 1/04, C22F 1/05, C22F 1/06

(54) **STRUKTURELEMENT FÜR EIN FLUGZEUG, INSBESONDERE FLUGZEUGTÜR**
STRUCTURAL ELEMENT FOR AN AIRCRAFT, ESPECIALLY AN AIRCRAFT DOOR
ELEMENT STRUCTUREL DESTINE A UN AVION, EN PARTICULIER PORTE D'AVION

(30) Priorität: 28.07.2000 DE 10037307
(43) Veröffentlichungstag der Anmeldung: 02.05.2003
(73) Patentinhaber: Honsel GmbH & Co. KG, 59872 Meschede (DE)
(72) Erfinder: SOLANILLE, Pierre, F-64190 Prechacq-Josbaig (FR); FUCHS, Heinrich, 59872 Meschede (DE); LAGRENE, Gérad, F-64230 Lescar (FR); SPYCHALA, Hans-Jürgen, 59872 Meschede (DE); CHRISTOPHE, Richard, F-64110 Jurancon (FR); ZEUMER, Norbert, 59872 Meschede (DE)
(74) Vertreter: Rehders, Jochen
(86) Internationale Anmeldenummer: PCT/EP2001/008445
(87) Internationale Veröffentlichungsnummer: WO 2002/010013

(56) Entgegenhaltungen:
- EP-A- 1 108 646
- WO-A-01/04001
- WO-A-01/23633
- US-A- 2 477 503
- US-A- 5 221 377
- US-A- 5 529 645

## Beschreibung

Die Erfindung betrifft ein Strukturelement für ein Flugzeug, insbesondere eine Flugzeugtür.

Strukturelemente für Flugzeuge, insbesondere Flugzeugtüren, bestehen herkömmlicherweise aus einer glatten Außenhaut, die auf der Innenseite mit damit vernieteten oder verklebten Profilen, Rippen und dergleichen versehen ist, um bei geringem Gewicht eine große Steifigkeit und Festigkeit zu erreichen.

Die Herstellung derartiger Strukturelemente ist aufwendig, da die Versteifungsprofile und Rippen häufig aus dem Vollen mit einem Zerspanungsgrad von mehr als 95 % hergestellt werden und auch das Vernieten mit dicht gesetzten Nieten einen großen Arbeitsaufwand erfordert.

Das Bearbeiten der Profile und Rippen aus dem Vollen ist notwendig, um die Endfestigkeit der verwendeten Aluminium- oder Magnesiumlegierung nicht durch Wärmeeinwirkung zu beeinträchtigen. Aus dem gleichen Grunde erfolgt auch das Verbinden der einzelnen Elemente durch Nieten oder Kleben und nicht durch Schweißen.

Dieses herkömmliche Fertigungsverfahren erlaubt es zwar, Strukturelemente mit minimiertem Gewicht herzustellen, deren Festigkeit ausreichend ist, jedoch ist keine Gewähr gegen das Entstehen von Spannungs- bzw. Ermüdungsrissen im Bereich von hoch belasteten Nietverbindungen oder in Bereichen mit hohen Kerbspannungen gegeben.

Der Erfindung liegt das Problem zugrunde, Strukturelemente für Flugzeuge, insbesondere Flugzeugtüren, zu schaffen, die sich bei niedrigem Gewicht und hoher Festigkeit kostengünstig herstellen lassen und aufgrund verminderter Rißausbreitungsgefahr reparatur- und servicefreundlich sind.

Diese Aufgabe wird erfindungsgemäß durch die Merkmale des Patentanspruchs 1 gelöst.

Insbesondere mit modernen Niederdruck-Sandgießverfahren lassen sich große, einstückige, integrale Gußteile mit gleichmäßigen, dünnen Wandstärken herstellen, die keiner oder einer erheblich geringeren Bearbeitung bedürfen als die herkömmlichen, aus Einzelelementen zusammengebauten Strukturen. Zur Verbesserung der Werkstoffeigenschaften kann Zirkonsand für die Formen und Kerne, ggf. in Verbindung mit Halbkokillen verwendet werden.

Die in Auspruch 1 definierten Querträger weisen Bogenfüße und Endflächen auf. Verzwgeweise können die Bogenfüße durch Längsrippen verbunden und die Endflächen durch schräge Seitenflächen verbunden und verschlossen sein.

Zusätzlich kann das Strukturelement, insbesondere in der Ausführungsform als Flugzeugtür, mit einem umlaufenden, durch eine umlaufende Rippe versteiften Flansch versehen sein.

Vorzugsweise kann das Strukturelement dabei mit einer einstückig und integral angegossenen, glatten Außenhaut versehen sein, die alternativ jedoch auch angeklebt oder angenietet sein kann.

Des weiteren kann das Strukturelement mit zur Rippe am Flansch etwa parallel verlaufenden, sich von den Enden der einen Seitenfläche zu den Enden der parallelen anderen Seitenfläche mit Abstand zu den äußeren Bogenfüßen der äußeren Querträger erstreckenden, zum Flansch etwa senkrechten Rippen versehen sein und können von den Bogenfüßen zu den Rippen verlaufende Versteifungsdreiecke vorgesehen sein.

Wenn die Außenhaut einstückig und integral angegossen ist, kann der Flansch einen Randbereich der Außenhaut bilden.

Bei dem erfindungsgemäßen Strukturelement lassen sich Werkstoffanhäufungen und schroffe Querschnittsübergänge vermeiden, wobei unvermeidliche Querschnittaufweitungen vorzugsweise in Speisungsrichtung gelegt sind.

Durch die bogenbrückenartige Ausbildung der hohlen Querträger lassen sich ausreichend große Öffnungen zum Entkernen vorsehen, hinterschnittene Kerngeometrien sind nicht erforderlich. Das Strukturelement weist keine tiefen und dünnen Schlitze, aus denen sich das Kemmaterial schwer entfernen läßt, auf und ist mit ausreichend großen, das Auspacken erleichternden Eckradien versehen.

Das Strukturelement kann vorzugsweise mit einer glatten Außenhaut, nach innen hervortretenden, parallelen Längsrippen, hohlen, die Längsrippen bogenbrückenartig übergreifenden, erhöhten Querträgern, die Endflächen der Querträger verbindenden und verschließenden Seitenflächen gleicher Höhe, einem umlaufenden, einen Teil der Außenfläche bildenden, durch eine umlaufende, nach innen vorstehende Rippe versteiften Flansch und Aufnahmen mit Spannflächen zum Richten, zur Justage und mechanischen Bearbeiten versehen sein.

Mit dem erfindungsgemäßen Strukturelement lassen sich einfache Formteilungen mit wenig Kernen, ausreichende Entformungsschrägen, ausreichende Kernquerschnitte für die Kernherstellung und die Handhabung sowie angemessene Kernlagerungen erreichen.

Wenn die Lochränder der bogenbrückenartigen Querträger mit Wülsten stabilisiert werden, ergibt sich ein geringer Verzug des Strukturelements bei einer sich an den Gießvorgang anschließenden Wärmebehandlung. Für eine problemlos durchführbare Wärmebehandlung werden eigenspannungsarme Rippenstrukturen verwendet, schroffe Querschnittsübergänge vermieden und Kerbspannungen durch ausreichend große Eckradien verringert. Das Strukturelement bleibt verzugsarm, wenn während der Wärmebehandlung in Luft abgeschreckt wird.

Für das Putzen der gegossenen Strukturelemente sind alle Form- und Kernteilungen leicht zugänglich, werden keine sich kreuzenden Kerne eingesetzt, sind im Bereich der Teilfugen Putzrippen vorgesehen, um zu vermeiden, daß beim Putzen die Werkstückoberfläche abgetragen wird und sind möglichst viele Putzbereiche dort angeordnet, wo nachfolgend eine mechanische Bearbeitung durchgeführt wird.

Mechanisch bearbeitet werden insbesondere die Außenfläche der Außenhaut und/oder die nach innen gerichteten Oberflächen der Querträger und/oder die Außenflächen der die Endflächen der Querträger verbindenden Seitenflächen und/oder die Innenfläche des umlaufenden Flansches und/oder die Versteifungsrippe am Flansch beidseitig und die Spannflächen der Aufnahmen.

Wenn die Bearbeitungszugaben für die Außenhaut etwa 6 mm für eine bearbeitete Wanddicke von etwa 1,5 bis 2,7 mm und für die übrigen, mechanisch zu bearbeitenden Flächen etwa 3 mm für eine bearbeitete Wanddicke von etwa 3 bis 4,2 mm betragen und die Wanddicke der gegossenen, unbearbeiteten Bereiche 3 bis 4,2 mm beträgt, läßt sich ein Strukturelement in einstückiger, integraler Gußausführung herstellen, dessen Gewicht geringer als das eines herkömmlich hergestellten Strukturelements ist und dessen Fertigungs- und Bearbeitungsaufwand ebenfalls stark herabgesetzt ist.

Die Aufnahmen mit den Spannflächen sind vorzugsweise an formstabilen Bereichen angeordnet, insbesondere an den vier Ecken eines durch die äußeren Querträger und die sie verbindenden Seitenflächen gebildeten Rechtecks.

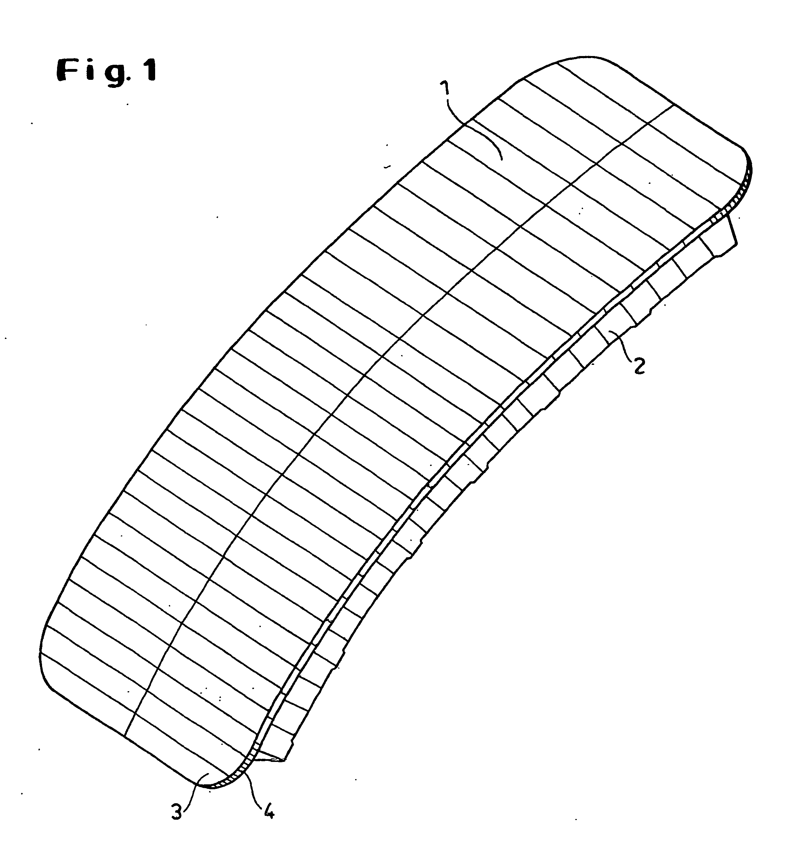

Die Erfindung wird nachstehend anhand eines in der Zeichnung dargestellten Ausführungsbeispiels des näheren erläutert. In der Zeichnung zeigen
- Fig. 1: eine perspektivische Ansicht auf die Außenfläche einer erfindungsgemäßen Flugzeugtür als Drahtmodell,

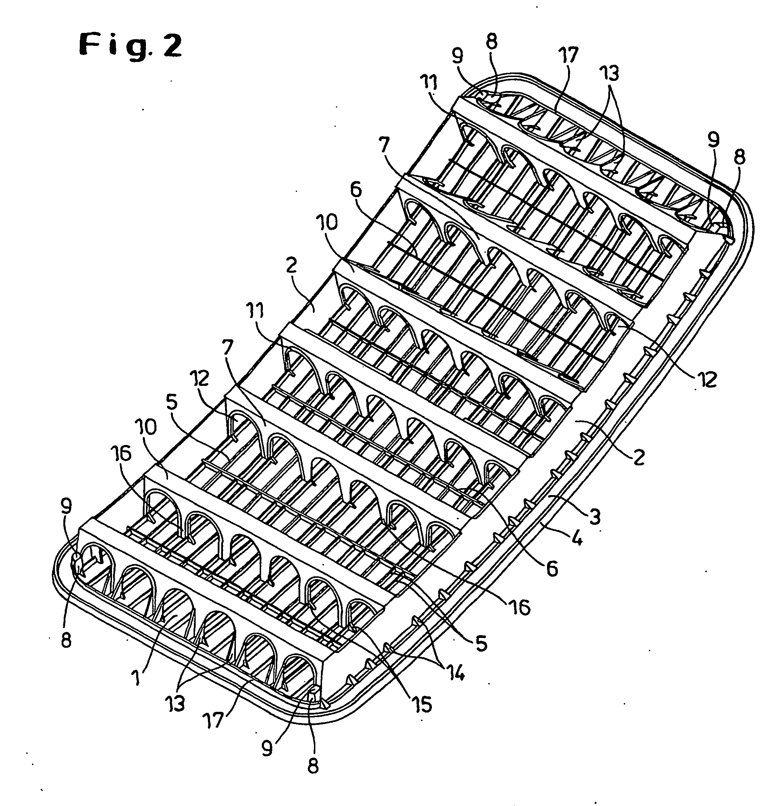

- Fig. 2: eine perspektivische Ansicht auf die unverkleidete Innenseite einer erfindungsgemäßen Flugzeugtür als Drahtmodell und

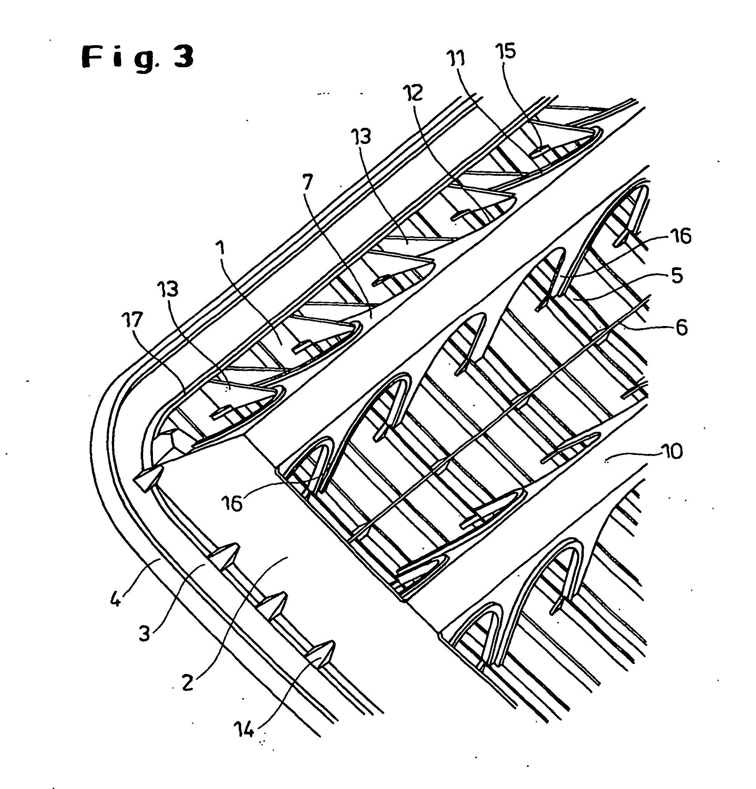

- Fig. 3: eine vergrößerte Ansicht eines Eckbereichs der Innenseite der erfindungsgemäßen Flugzeugtür als Drahtmodell.

Das erfindungsgemäße Strukturelement ist beim dargestellten Ausführungsbeispiel eine Flugzeugtür in einstückiger, integraler Gußausführung aus einer Aluminium- oder Magnesiumlegierung und weist eine Höhe von ca. 2400 mm und eine Breite von ca. 1300 mm auf

Die Flugzeugtür ist in üblicher Weise mit einem Radius gebogen, der der Krümmung des Rumpfteils entspricht, wo die Tür eingesetzt wird.

Eine Außenhaut 1, die außen völlig glattflächig ist, ist mit einer tragenden Versteifungsstruktur verbunden, die aus Längsrippen 5, Querrippen 6, die Längsrippen 5 bogenbrückenartig übergreifenden, erhöhten Querträgern 7 und die Endflächen der Querträger 7 verbindenden und verschließenden Seitenflächen 2 besteht. Ein umlaufender Flansch 3 bildet einen Teil der Außenhaut 1 und ist durch eine umlaufende, nach innen vorstehende Rippe 4 versteift.

An den Schmalseiten sind zur Rippe 4 am Flansch 3 etwa parallel verlaufende, sich von den Enden der einen Seitenfläche 2 zu den Enden der parallelen, anderen Seitenfläche 2 mit Abstand zu den äußeren Bogenfüßen 16 der äußeren Querträger 7 erstieckende, zum Flansch 3 etwa senkrechte Rippen 17 vorgesehen.

Jeweils eine Längsrippe 5 verläuft etwa mittig unter den Bogenöffnungen 12, während zwei weitere, parallele Längsrippen 5 einen Abstand entsprechend der Breite der Bogenfüße 16 aufweisen und mit diesen verbunden sind. An den vier Ecken im Bereich der Enden der oberen und unteren Querträger 7 und der Seitenflächen 2 sind Aufnahmen 8 mit Spannflächen 9 für das Halten während einer Wärmebehandlung, das Richten und die mechanische Bearbeitung angeordnet. Von den Bogenfüßen der äußeren Querträger 7 erstrecken sich Versteifungsdreiecke 13 zu den Rippen 17. Weitere Versteifungsdreiecke 14 sind entlang den Seitenflächen 2 angeordnet. Schließlich sind auch noch Versteifungsdreiecke 15 im Bereich der Bogenfüße 16 und der dort verlaufenden Rippen 5 vorgesehen. Zwischen den Querträgern 7 können die Seitenflächen 2 zusätzlich nach innen mittels nicht dargestellter Versteifungsdreiecke abgestützt sein, um ein Einbeulen der Seitenflächen 2 unter einer Biegebeanspruchung zu vermeiden.

Die Ränder der Bogenöffnungen 12 sind mittels Wülsten 11 stabilisiert.

Durch möglichst große Übergangsradien zwischen den Einzelelementen wird eine eigenspannungsarme Rippenstruktur erreicht, die keine schroffen Querschnittsübergänge aufweist. Durch ausreichend große Eckradien entstehen nur geringe Kerbspannungen bei der Wärmebehandlung nach dem Gießen und im Betrieb. Die Flugzeugtür mit der erfindungsgemäßen Struktur ist besonders verzugsarm nach der Wärmebehandlung, insbesondere dann, wenn die Flugzeugtür nach der Wärmebehandlung mit Luft abgeschreckt wird.

Das erfindungsgemäße Strukturelement ergibt einfache Formteilungen, erfordert wenig Kerne und läßt sich mit ausreichenden Entformungsschrägen versehen. Die Querschnitte der Kerne sind ausreichend groß, so daß sie einfach herzustellen und zu handhaben sind.

Das Strukturelement läßt sich vorzugsweise mit dem Niederdruck-Sandgießverfahren herstellen. Die Werkstoffeigenschaften werden durch den Einsatz von Zirkonsand und/oder einer Halbkokille verbessert.

Mit dem erfindungsgemäßen Strukturelement lassen sich Werkstoffanhäufungen und schroffe Querschnittsübergänge vermeiden, unvermeidliche Querschnittsaufweitungen lassen sich in Speisungsrichtung legen. Die Wanddicken lassen sich gießtechnisch so verwirklichen, daß die Wanddicke der gegossenen, mechanisch nicht bearbeiteten Bereiche 3 bis 4,2 mm, die Wanddicke der Außenhaut im Gußzustand etwa 7,5 bis 8,7 mm und die der übrigen, mechanisch zu bearbeitenden Flächen etwa 6 bis 7,2 mm betragen.

Nach der mechanischen Bearbeitung beträgt die Wanddicke der Außenhaut 1 etwa 1,5 bis 2,7 mm, d. h. die Bearbeitungszugabe beträgt etwa 6 mm, während die Wanddicke der übrigen, mechanisch zu bearbeitenden Flächen, d. h. des Flansches 3, der Rippe 4, der Querträgeroberflächen 10 vor der mechanischen Bearbeitung etwa 6 bis 7,2 mm und nach der mechanischen Bearbeitung etwa 3 bis 4,2 mm betragen. Die genannten Bearbeitungsflächen sind von den nicht zu bearbeitenden Rohteilflächen abgesetzt, und es sind überall möglichst große Eckradien vorgesehen.

Zur Erleichterung des Auspackens aus der Gußform sind in den Querträgern 7 ausreichend große Bogenöffnungen 12 vorgesehen, so daß sich die hohlen Bereiche unter den Querträgern 7 leicht entkernen lassen. Hinterschnittende Kerngeometrien sind nicht vorhanden, ebensowenig tiefe, dünne Schlitze, aus denen sich der Formsand schlecht entfernen läßt.

Alle Form- und Kernteilungen sind leicht zugänglich und mit Putzrippen versehen, so daß die Gefahr, beim Putzen die Werkstoffoberfläche abzutragen, verringert ist.

Angüsse, Verteilerkanäle und Speiser lassen sich in Bereiche legen, die mechanisch bearbeitet werden, so daß der Aufwand beim Putzen gering ist und sich für das Putzen Roboter einsetzen lassen.

Die Aufnahmepunkte zum Richten und mechanischen Bearbeiten, d. h. die Aufnahmen 8 mit den Spannflächen 9, sind an formstabilen Bereichen des Strukturelements angeordnet und ausreichend dimensioniert.

Das erfindungsgemäße Strukturelement weist bei einer einfachen Geometrie sehr gute statische und dynamische Festigkeitseigenschaften auf, ohne eine aufwendige Kerntechnik zu erfordern. Die Wanddicken lassen sich hinsichtlich der Beanspruchungszonen optimieren.

Das dargestellte Ausführungsbeispiel zeigt eine einschließlich der Außenhaut 1 einstückig und integral gegossene Flugzeugtür, jedoch ist es auch möglich, ein Strukturelement aus den Seitenflächen 2, ggf. dem Flansch 3 mit der Rippe 4, den Längsrippen 5, den Querrippen 6, den Querträgern 7, den Aufnahmen 8 und den Rippen 17 als Gußteil herzustellen, wo erforderlich, an Flächen mechanisch zu bearbeiten und anschließend mit einer Außenhaut 1 aus Walzblech durch Nieten oder Kleben zu verbinden.

## Patentansprüche

1. Strukturelement für ein Flugzeug, insbesondere Flugzeugtür, in einstückiger, integraler Gußausführung aus einer Aluminium- oder Magnesiumlegierung mit hohlen, bogenbrückenartigen Querträgern (7), die ausreichend große Bogenöffnung (12) zum Entkernen und keine hinterschnittenen Kerngeometrien aufweisen und mit mechanisch bearbeiteten Spannflächen (9) aufweisenden Aufnahmen (8) zum Halten während einer Wärmebehandlung, eines Richtens und einer mechanischen Bearbeitung.

2. Strukurelement nach Anspruch 1, wobei die Querträger (7) Bogenfüße (16) und Endflächen aufweisen, welche Bogenfüße (16) durch Längsrippen (5) verbunden und welcher Endflächen durch schräge Seitenflächen (2) verbunden und verschlossen sind.

3. Strukturelement nach Anspruch 2 mit einem umlaufenden, durch eine umlaufende, etwa senkrechte Rippe (4) versteiften Flansch (3).

4. Strukturelement nach Anspruch 3 mit zur Rippe (4) am Flansch (3) etwa parallel verlaufenden, sich von den Enden der einen Seitenfläche (2) zu den Enden der parallelen, anderen Seitenfläche (2) mit Abstand zu den äußeren Bogenfüßen (16) der äußeren Querträger (7) erstreckenden, zum Flansch (3) etwa senkrechten Rippen (17).

5. Strukturelement nach Anspruch 4 mit von den Bogenfüßen (16) zu den Rippen (17) verlaufenden Versteifungsdreiecken (13).

6. Strukturelement nach einem der Ansprüche 1 bis 5 mit einer einstückig und integral angegossenen, glatten Außenhaut (1).

7. Strukturelement nach Anspruch 6, bei dem der Flansch (3) einen Randbereich der Außenhaut (1) bildet.

8. Strukturelement nach einem der Ansprüche 1 bis 7 aus
- einer glatten Außenhaut (1),
- nach innen hervortretenden, parallelen Längsrippen (5),
- hohlen, die Längsrippen (5) bogenbrückenartig übergreifenden, erhöhten Querträgern (7),
- die Endflächen der Querträger (7) verbindenden und verschließenden Seitenflächen (2) gleicher Höhe,
- einem umlaufenden, einen Teil der Außenhaut (1) bildenden, durch eine umlaufende, nach innen vorstehende Rippe (4) versteiften Flansch (3) und
- Aufnahmen (8) mit Spannflächen (9) zum Richten und mechanischen Bearbeiten.

9. Strukturelement nach einem der Ansprüche 1 bis 8, bei dem die Lochränder der bogenbrückenartigen Querträger (7) mit Wülsten (11) stabilisiert sind.

10. Strukturelement nach einem der Ansprüche 1 bis 9, bei dem die Außenfläche der Außenhaut (1) und/oder die nach innen gerichteten Oberflächen (10) der Querträger (7) und/oder die die Außenflächen der die Endflächen der Querträger (7) verbindenden Seitenflächen (2) und/oder der umlaufende Flansch (3) an seiner Innenfläche und/oder die Versteifungsrippe (4) am Flansch beidseitig mechanisch bearbeitet sind.

11. Strukturelement nach Anspruch 10, bei dem die Bearbeitungszugaben für die Außenhaut (1) etwa 6 mm für eine bearbeitete Wanddicke von etwa 1,5 bis 2,7 mm und für die übrigen, mechanisch zu bearbeitenden Flächen etwa 3 mm für eine bearbeitete Wanddicke von etwa 3 bis 4,2 mm beträgt.

12. Strukturelement nach einem der Ansprüche 1 bis 11, bei.dem die Wanddicke der gegossenen, unbearbeiteten Bereiche 3 bis 4,2 mm beträgt.

13. Strukturelement nach einem der Ansprüche 1 bis 12, bei dem die Aufnahmen (8) mit den Spannflächen (9) an formstabilen Bereichen angeordnet sind.

14. Strukturelement nach Anspruch 13, bei dem die Aufnahmen mit den Spannflächen (9) in den vier Ecken eines durch die äußeren Querträger (7) und die sie verbindenden Seitenflächen (2) gebildeten Rechtecks angeordnet sind.

15. Strukturelement nach einem der Ansprüche 1 bis 14 mit eigenspannungsarmen Rippenstrukturen.

16. Strukturelement nach einem der Ansprüche 1 bis 15 mit stetigen, abgerundeten Querschnittsübergängen.

17. Strukturelement nach einem der Ansprüche 1 bis 16 mit Kerbspannungen vermindernden, großen Eckradien.

18. Strukturelement nach einem der Ansprüche 1 bis 17 mit Luftabschreckung während der Wärmebehandlung zur Reduzierung von Eigenspannungen im Bauteil.

## Claims

1. A structural element for an aircraft, in particular an aircraft door, in a one-piece, integral cast configuration made from an aluminium or magnesium alloy with hollow, arched-bridge-like transverse members (7) which have a sufficiently large arch opening (12) for core removal and no undercut core geometries, and with machined receptacles (8) having clamping faces (9) for holding during heat treatment, straightening and machining.

2. A structural element according to Claim 1, wherein the transverse members (7) have arch feet (16) and end faces, which arch feet (16) are connected by longitudinal ribs (5) and which end faces are joined and closed by inclined side faces (2).

3. A structural element according to Claim 2, with a circumambient flange (3) stiffened by a circumambient, approximately perpendicular rib (4).

4. A structural element according to Claim 3, with ribs (17) which extend approximately parallel to the rib (4) on the flange (3) and extend from the ends of one side face (2) to the ends of the parallel other side face (2) at a distance from the outer arch feet (16) of the outer transverse members (7) and are approximately perpendicular to the flange (3).

5. A structural element according to Claim 4, with stiffening triangles (13) extending from the arch feet (16) to the ribs (17).

6. A structural element according to one of Claims 1 to 5, with a smooth outer skin (1) which is cast on in one piece and integrally.

7. A structural element according to Claim 6, in which the flange (3) forms an edge region of the outer skin (1).

8. A structural element according to one of Claims 1 to 7 consisting of
- a smooth outer skin (1),
- inward-protruding, parallel longitudinal ribs (5),
- hollow elevated transverse members (7) which extend across the longitudinal ribs (5) in the manner of an arched bridge,
- side faces (2) of the same height which join and seal the end faces of the transverse members (7),
- a circumambient flange (3) forming part of the outer skin (1) and stiffened by a circumambient, inward-projecting rib (4), and
- receptacles (8) with clamping faces (9) for straightening and machining.

9. A structural element according to one of Claims 1 to 8, in which the hole edges of the arched-bridge-like transverse members (7) are stabilised with beads (11).

10. A structural element according to one of Claims 1 to 9, in which the outer surface of the outer skin (1) and/or the inward-directed surfaces (10) of the transverse members (7) and/or the outer surfaces of the side faces (2) joining the end faces of the transverse members (7) and/or the circumambient flange (3) on its inner face and/or the stiffening rib (4) on the flange on both sides are machined.

11. A structural element according to Claim 10, in which the machining allowances for the outer skin (1) are approximately 6 mm for a machined wall thickness of about 1.5 to 2.7 mm and for the other faces which are to be machined approximately 3 mm for a machined wall thickness of approximately 3 to 4.2 mm.

12. A structural element according to one of Claims 1 to 11, in which the wall thickness of the cast, un-machined regions is 3 to 4.2 mm.

13. A structural element according to one of Claims 1 to 12, in which the receptacles (8) with the clamping faces (9) are arranged on dimensionally stable regions.

14. A structural element according to Claim 13, in which the receptacles with the clamping faces (9) are arranged in the four corners of a rectangle formed by the outer transverse members (7) and the side faces (2) connecting them.

15. A structural element according to one of Claims 1 to 14, with rib structures having low internal stresses.

16. A structural element according to one of Claims 1 to 15, with constant, rounded cross-sectional transitions.

17. A structural element according to one of Claims 1 to 16, with large corner radii which reduce notch stresses.

18. A structural element according to one of Claims 1 to 17, with air quenching during the heat treatment to reduce internal stresses in the component.

## Revendications

1. Elément structurel pour un avion, en particulier porte d'avion, réalisé sous forme de pièce coulée intégrale d'un seul tenant dans un alliage d'aluminium ou de magnésium, comportant des traverses (7) creuses formant des ponts en arc, dont l'ouverture d'arc (12) est suffisamment grande pour l'enlèvement du noyau et dont le noyau n'a pas de géométrie en contre-dépouille, et comportant des logements (8), qui sont munis de surfaces de fixation (9) usinées mécaniquement et sont destinés à assurer un maintien pendant un traitement thermique, un dressage et un usinage mécanique.

2. Elément structurel selon la revendication 1, dans lequel les traverses (7) comportent des pieds d'arc (16) et des surfaces d'extrémité, les pieds d'arc (16) étant reliés par des nervures longitudinales (5) et les surfaces d'extrémité étant reliées et fermées par des faces latérales inclinées (2).

3. Elément structurel selon la revendication 2, comportant une bride (3) raidie par un rebord périphérique (4) sensiblement perpendiculaire.

4. Elément structurel selon la revendication 3, comportant des nervures (17) qui sont sensiblement perpendiculaires à la bride (3), sont sensiblement parallèles au rebord (4) sur la bride (3) et s'étendent, à distance des pieds d'arc (16) extérieurs des traverses (7) extérieures, à partir des extrémités de l'une des faces latérales (2) vers les extrémités de l'autre face latérale (2) parallèle.

5. Elément structurel selon la revendication 4 comportant des triangles de raidissement (13) qui s'étendent à partir des pieds d'arc (16) vers les nervures (17).

6. Elément structurel selon l'une quelconque des revendications 1 à 5, comportant une paroi extérieure (1) lisse, coulée d'un seul tenant et intégralement contre ledit élément structurel.

7. Elément structurel selon la revendication 6, dans lequel la bride (3) forme une zone de bordure de la paroi extérieure (1).

8. Elément structurel selon l'une quelconque des revendications 1 à 7, formé par
- une paroi extérieure (1) lisse,
- des nervures longitudinales (5) parallèles, en saillie vers l'intérieur,
- des traverses (7) creuses, plus hautes, s'engageant en forme de ponts en arc au-dessus des nervures longitudinales (5),
- des faces latérales (2) de même hauteur reliant et fermant les surfaces d'extrémité des traverses (7),
- une bride (3) périphérique formant une partie de la paroi extérieure (1) et rigidifiée par un rebord périphérique (4) en saillie vers l'intérieur,
- des logements (8) avec des surfaces de fixation (9) pour le dressage et l'usinage mécanique.

9. Elément structurel selon l'une quelconque des revendications 1 à 8, dans lequel les bords perforés des traverses (7) en forme de ponts en arc sont stabilisés par des bourrelets (11).

10. Elément structurel selon l'une quelconque des revendications 1 à 9, dans lequel la face extérieure de la paroi extérieure (1) et/ou les surfaces (10), orientées vers l'intérieur, des traverses (7) et/ou les surfaces extérieures des faces latérales (2) reliant les surfaces d'extrémité des traverses (7) et/ou la face intérieure de la bride(3) périphérique et/ou les rebords de raidissement (4) de part et d'autre de la bride sont soumises à un usinage mécanique.

11. Elément structurel selon la revendication 10, dans lequel les surépaisseurs pour l'usinage sont de l'ordre de 6 mm environ pour la paroi extérieure (1) en vue d'une épaisseur de paroi usinée de 1,5 à 2,7 mm environ et sont de l'ordre de 3 mm environ pour les autres surfaces à usiner mécaniquement en vue d'une épaisseur de paroi usinée de 3 à 4,2 mm environ.

12. Elément structurel selon l'une quelconque des revendications 1 à 11, dans lequel l'épaisseur de paroi des zones coulées non usinées est de l'ordre de 3 à 4,2 mm.

13. Elément structurel selon l'une quelconque des revendications 1 à 12, dans lequel les logements (8) avec les surfaces de fixation (9) sont agencés dans des zones de forme stable.

14. Elément structurel selon la revendication 13, dans lequel les logements (8) avec les surfaces de fixation (9) sont agencés dans les quatre coins d'un rectangle formé par les traverses (7) extérieures et les faces latérales (2) reliant celles-ci.

15. Elément structurel selon l'une quelconque des revendications 1 à 14, comportant des structures nervurées sans contrainte interne.

16. Elément structurel selon l'une quelconque des revendications 1 à 15, comportant des transitions de section continues arrondies.

17. Elément structurel selon l'une quelconque des revendications 1 à 16, comportant de grands rayons d'angle diminuant les contraintes d'entaille.

18. Elément structurel selon l'une quelconque des revendications 1 à 17, avec une trempe à l'air pendant le traitement thermique pour la diminution des contraintes internes dans la pièce.
